# EUROPÄISCHE PATENTSCHRIFT

(11) **EP 1 689 632 B1**
(45) Veröffentlichungstag und Bekanntmachung des Hinweises auf die Patenterteilung: **17.10.2007**
(21) Anmeldenummer: 04819648.9
(22) Anmeldetag: 02.12.2004
(51) Int. Cl.: B62D 5/04

(54) **ÜBERLAGERUNGSLENKUNG FÜR EIN FAHRZEUG**
SUPERIMPOSED STEERING SYSTEM FOR A VEHICLE
DIRECTION A SUPERPOSITION POUR UN VEHICULE

(30) Priorität: 06.12.2003 EP 03028023; 23.01.2004 DE 102004003582
(43) Veröffentlichungstag der Anmeldung: 16.08.2006
(73) Patentinhaber: ZF Lenksysteme GmbH, 73527 Schwäbisch Gmünd (DE)
(72) Erfinder: KRUTTSCHNITT, Andreas, 89522 Heidenheim (DE); RUPP, Arthur, 73460 Hüttlingen (DE)
(86) Internationale Anmeldenummer: PCT/EP2004/013710
(87) Internationale Veröffentlichungsnummer: WO 2005/054035

(56) Entgegenhaltungen:
- EP-A- 1 013 534
- EP-A- 1 384 648
- DE-A1- 10 253 465
- DE-A1- 19 748 667
- US-A- 6 029 768

## Beschreibung

Die Erfindung betrifft eine Überlagerungslenkung für ein Fahrzeug, insbesondere eine Servo- oder Hilfskraftlenkung für ein Kraftfahrzeug nach dem Oberbegriff des Anspruchs 1.

Überlagerungslenkungen sind bekannt und zeichnen sich dadurch aus, dass dem von einem Fahrer eines Fahrzeugs an einer Lenkhandhabe gewählten Lenkwinkel bei Bedarf ein weiterer Drehwinkel durch einen Aktuator überlagert werden kann. Der zusätzliche Drehwinkel wird durch eine elektronische Steuerungs- und/oder Regelungseinrichtung gesteuert und dient zur Erhöhung der Fahrstabilität des Fahrzeugs oder zu sonstigen Zwecken.

Zur Erzeugung eines Zusatzwinkels oder weiteren Drehwinkels ist aus der DE 101 29 450 A1 und der DE 101 60 313 A1 bekannt, ein Planetenradgetriebe als Überlagerungsgetriebe anzuwenden, wobei eine Lenkwelle, die mit einer ersten Getriebeeingangswelle verbunden ist, axial unterbrochen ist und von einem Stufenplaneten, der um Sonnenräder der Lenkwellenteile sich bewegt, drehbar verbunden wird. Die Stufenplaneten sind in einem Planetenradträger gelagert. Der Planetenradträger ist wiederum mit einem Schraub- oder Schneckengetriebe um die Lenkwelle und deren Sonnenräder bewegbar, wobei die Drehbewegung des Planetenradträgers mit Hilfe einer Schraube oder Schnecke an einer zweiten Getriebeeingangswelle des Überlagerungsgetriebes ausgeführt wird.

Solche Überlagerungsgetriebe weisen eine Vielzahl an Zahneingriffen auf. Dadurch ergibt sich ein Getriebespiel, das sich in einem unerwünschten Lenkungsspiel niederschlagen kann. Die beschriebenen Überlagerungsgetriebe mit Servomotor sind zudem technisch relativ aufwendig und teuer.

Die DE 102 20 123 A1 offenbart eine Überlagerungslenkung, wobei in eine Lenksäulenwelle, die ein Lenkrad mit einem Lenkgetriebe verbindet ein servoelektromotorischer Antrieb integriert ist. Der servo-elektromotorische Antrieb weist ein Gehäuse auf, das mit einem ersten Abschnitt der Lenksäulenwelle verbunden ist und eine Antriebswelle auf, die mit einem zweiten Abschnitt der Lenksäulenwelle verbunden ist. Der erste Abschnitt der Lenksäulenwelle ist mit einem Lenkrad und der zweite Abschnitt mit dem Lenkgetriebe oder umgekehrt verbunden. Durch den servo-elektromotorischen Antrieb ist die Antriebswelle relativ zu dem Gehäuse des servo-elektromotorischen Antriebs drehbar, um einen zusätzlichen Drehwinkel zu erzeugen. Mit dieser Überlagerungslenkung wird zwar einer Rotationsbewegung zwischen Lenkrad und Lenkgetriebe ein zusätzlicher Winkel überlagert, das Gegendrehmoment des servo-elektromotorischen Antriebs stützt sich aber an der Lenksäulenwelle ab, was zu einem unkomfortablen Lenk- oder Fahrgefühl eines Fahrers führen kann.

Aus der DE 102 53 465 A1 ist ein Lenksystem bekannt, mit einer Lenkwelle zur mechanischen Verbindung einer Lenkhandhabe mit einer Eingangswelle eines Lenkgetriebes, und mit einem Servomotor zur Bereitstellung eines Drehmomentes auf einen exzentrischen Antriebskern eines Wellgetriebes an der Lenkwelle, und mit einer radialflexiblen Abrollbuchse in die der Antriebskern axial eingreift, wobei ein oder mehrere Umfangsabschnitte einer Außenmantelfläche der Abrollbuchse in fortlaufendem Wechsel mit einer im wesentlichen zylindrischen Stützfläche eines fahrzeugfesten Stützringes in Eingriff gehalten sind und die Abrollbuchse mit der Eingangswelle des Lenkgetriebes drehfest verbunden ist, wobei die Lenkwelle das Wellgetriebe durchgreift. Bei dieser Lösung sind keine konkreten Konstruktionselemente zum Einsatz des Getriebes als Überlagerungsgetriebe aufgeführt.

Es sind Überlagerungslenkungen bekannt, die als Überlagerungsgetriebe ein Well- oder Pulsatorgetriebe aufweisen. Der Servomotor solcher Wellgetriebe stützt aber sein Drehmoment an der Lenksäule ab. Zudem benötigen diese Wellgetriebe ein stabiles Gehäuse um das Drehmoment und den Drehwinkel an der Lenkhandhabe auf die Getriebeausgangswelle des Überlagerungsgetriebes zu übertragen.

Der Erfindung liegt die Aufgabe zugrunde, eine spielfreie, in der Handhabung komfortable und im Aufbau einfache Überlagerungslenkung für ein Fahrzeug zu schaffen, deren Bauraumbedarf minimiert ist.

Die Aufgabe wird mit einer Überlagerungslenkung mit den Merkmalen des Anspruchs 1 gelöst.

Das Überlagerungsgetriebe kann zu diesem Zweck ohne Gehäuse ausgebildet sein, indem das Drehmoment und der Drehwinkel an der Lenkhandhabe und der ersten Getriebeeingangswelle auf die radialflexible Abrollbuchse des Wellgetriebes direkt über eine lösbare Verbindung übertragen wird. Dabei durchreift die erste Getriebeeingangswelle einen exzentrischen, vorzugsweise ellipsenförmigen Antriebskern des Wellgetriebes, der in radialer Richtung nockenförmig in die radialflexible Abrollbuchse ragt und mit der zweiten Getriebeeingangswelle und dem Servomotor drehfest verbunden ist.

Bevorzugte Ausführungen ergeben sich aus den Unteransprüchen.

Das Wellgetriebe weist eine erste Getriebeeingangswelle auf, die drehfest mit der Lenkwelle und der Lenkhandhabe des Fahrzeugs verbunden ist. Die zweite Getriebeeingangswelle ist als Hohlwelle ausgebildet die von dem Servomotor angetrieben ist. Die zweite Getriebeeingangswelle ist drehfest mit dem exzentrischen, insbesondere ellipsenförmigen Antriebskern des Wellgetriebes verbunden. Der exzentrische Antriebskern greift axial in die radialflexible Abrollbuchse (flex-spline) des Wellgetriebes ein, wobei ein oder mehrere Umfangsabschnitte einer Außenmantelfläche der radialflexiblen Abrollbuchse in fortlaufendem Wechsel mit einer im wesentlichen zylindrischen Stützfläche eines drehfest mit der Getriebeausgangswelle verbundenen Stützrings in Eingriff ist. Die Lenkwelle ist somit im axialen Bereich des Stützrings des Wellgetriebes in eine erste Getriebeeingangswelle, die mit der Lenkhandhabe drehfest verbunden ist, und in eine Getriebeausgangswelle, die drehfest mit dem Stützring verbunden ist, getrennt. Die Getriebeausgangswelle ist mit dem Stützring fest verbunden und kann drehbar in einem Gestell oder Gehäuse des Wellgetriebes angeordnet sein. Auf diese Weise ist es ermöglicht, die Getriebeausgangswelle relativ zu der ersten Getriebeeingangswelle zu drehen, wodurch ein positiver oder negativer Lenkwinkel zusätzlich zu dem vom Fahrer an der Lenkhandhabe eingegebenen Lenkwinkel in die Lenkwelle eingegeben werden kann.

Zur Erleichterung der Montage des Wellgetriebes und um einzelne Komponenten rasch austauschen zu können, ist die erste Getriebeeingangswelle lösbar mit der exzentrischen Abrollbuchse verbunden. Dies hat zudem den Vorteil, dass die einzelnen Komponenten des Wellgetriebes aus verschiedenen Werkstoffen darstellbar sind und bekannte Fertigungsverfahren für die Komponenten anwendbar bleiben. Um den Bedienungskomfort des Lenksystem zu verbessern, ist vorgesehen, dass das Drehmoment des Servomotors sich an einem fahrzeugfesten Bauteil des Lenksystems oder Fahrzeugs abstützt, das nicht die Lenksäule selbst ist.

Die radialflexible Abrollbuchse ist zur einfachen Montage und eventuellen wartungsbedingten Demontage mit Hilfe eines Verbindungselements, wie etwa einem Schraubbolzen, bevorzugt formschlüssig lösbar an der ersten Getriebeeingangswelle festgelegt. Zwischen der radialflexiblen Abrollbuchse und der ersten Getriebeeingangswelle ist eine, einen drehfesten Formschluß bewirkende Kupplungsscheibe angeordnet oder geklemmt. Die Kupplungsscheibe greift mit Rastelementen formschlüssig in die erste Getriebeeingangswelle und die radialflexible Abrollbuchse ein. Der drehfest mit einer Welle des Servomotors verbundene exzentrische Antriebskem ist über Wälzlager an seinen axialen Enden auf der ersten Getriebeeingangswelle drehbar gelagert. Der exzentrische Antriebskern ist radial zwischen der ersten Getriebeeingangswelle und der radialflexiblen Abrollbuchse angeordnet und zur Verringerung des Bauraumbedarfs des Lenksystems radial möglichst gedrungen ausgeführt.

Der exzentrische Antriebskern greift bevorzugt axial über einen großen Teil in die radialflexible Abrollbuchse und in den bevorzugt glockenförmigen Stützring ein. Dadurch ergibt sich eine axial und radial kompakte Bauweise des Wellgetriebes und des Lenksystems. Der exzentrische Antriebskern wälzt sich mit einem flexiblen Kugellager in der radialflexiblen Abrollbuchse ab und verformt diese in fortlaufendem Wechsel. Dabei gelangen, in Abhängigkeit von der Querschnittsform des Antriebskernes, ein oder mehrer Umfangsabschnitte der Außenmantelfläche der radialflexiblen Abrollbuchse mit einer im wesentlichen zylindrischen Stützfläche des Stützringes in Eingriff. Der Stützring (circular-spline) umgibt radial die Abrollbuchse. Da der Umfang der Außenmantelfläche der radialflexiblen Abrollbuchse kürzer als der Umfang der zylindrischen Stützfläche des Stützringes ist, dreht sich der Stützring um diese Längendifferenz und somit die mit dem Stützring drehfest verbundene Getriebeausgangswelle, die wiederum mit der Eingangswelle des Lenkgetriebes verbunden ist. Ein zusätzlicher Lenkwinkel in positiver oder negativer Richtung zu dem an der Lenkhandhabe eingegebenen Lenkwinkel ist dadurch mit großer Präzision auf den Stützring und die Getriebeausgangswelle aufbringbar.

Zur Spielfreistellung des exzentrischen Antriebskerns sind ein oder mehrere Wälzlager dessen auf der ersten Getriebeeingangswelle axial vorgespannt. Die axiale Vorspannung erfolgt bevorzugt mit einer Tellerfeder, die sich axial an einem Außen- oder Innenring des Wälzlagers und an der Kupplungsscheibe abstützt. Zur bevorzugten Loslagerung der ersten Getriebeeingangswelle ist diese über ein Lager an einem axialen Ende der Getriebeausgangswelle gelagert. Das Lager ist bevorzugt als Nadelhülse ausgebildet. In das Lager greift bevorzugt ein formschlüssig lösbarer Lagerzapfen am axialen Ende der ersten Getriebeeingangswelle ein. Der Lagerzapfen weist eine Schlüsselweite oder eine von der Kreisform abweichende Eingriffsmöglichkeit für ein Werkzeug, wie etwa einen Innensechskant auf, und bildet somit gleichzeitig das Befestigungselement zur formschlüssig lösbaren Festlegung der Kupplungsscheibe und der radialflexiblen Abrollbuchse an der ersten Getriebeeingangswelle.

Es kann zweckmäßig sein, den Servomotor mit seinem Gehäuse getrennt von dem Gehäuse des Wellgetriebes anzuordnen und die Servomotorwelle über ein Getriebe, welches bevorzugt ins Langsame übersetzt, mit dem exzentrischen Antriebskem zu verbinden. Das Getriebe kann als Zahnradgetriebe, wie etwa als Stirnradgetriebe, als Schneckengetriebe, als Schraubgetriebe oder als Kegelradgetriebe ausgebildet sein. Dabei kann der exzentrische Antriebskern bevorzugt an einem axialen Ende einstückig mit einem Zahnrad des Getriebes ausgebildet sein. Das Getriebe kann auch als Zugmittelgetriebe mit allen geeigneten und bekannten Zugmitteln, wie Zahnriemen, Keilriemen, Ketten usw. ausgebildet sein, wobei der exzentrische Antriebskern einstückig mit einer Riemenscheibe oder einem Kettenrad ausgebildet sein kann.

Es kann auch zweckmäßig sein, den Servomotor als Hohlwellenmotor auszubilden, wobei ein Läufer des Servomotors um die Lenkwelle drehbar angeordnet ist. Die Hohlwelle des Servomotors kann dabei einstückig mit dem exzentrischen Antriebskern gebildet sein und mit diesem in der radialflexiblen Abrollbuchse enden.

Der Servomotor wird von einer Steuerungs- und/oder Regelungseinrichtung angesteuert, wobei die Steuerungs- und/oder Regelungseinrichtung eingangseitig mit einem Sensor zur Bestimmung des Lenkdrehmomentes, des Lenkwinkels und/oder mit einem Sensor zu Bestimmung des Drehwinkels der Lenkhandhabe signalübertragend verbunden ist. Es kann zweckmäßig sein, die Sensoren als kontaktlos arbeitende Sensoren auszubilden und das Lenksystem als parametergesteuerte Servo- oder Hilfskraftlenkung auszubilden. Bevorzugt sind der Servomotor, die Steuerungs- und/oder Regelungseinrichtung, das Wellgetriebe und die Sensoren zur Drehwinkel- und Drehmomentbestimmung der Lenkhandhabe in einem Gehäuse zusammengefasst. Die einzelnen Bauelemente können in dem Gehäuse getrennt und abgeschirmt voneinander angeordnet sein.

Der gesamte Aufbau der Überlagerungslenkung ermöglicht, dass die Strom- und/oder Signalleitung zwischen den Komponenten des Lenksystems ohne zusätzliche Stromführungseinrichtungen, wie Schleifer oder Wickelfedern oder dgl. möglich ist. Eine Steigerung der Betriebssicherheit des Lenksystems ist dadurch gegeben.

Das Wellgetriebe ist bevorzugt überwiegend aus Stahl gebildet, zumindest die radialflexible Abrollbuchse und der Antriebskern sind aus diesem Werkstoff gebildet. Es kann auch zweckmäßig sein, Komponenten des Wellgetriebes aus einem Nichtmetall - oder Nichteisenmetallwerkstoff zu bilden. Der Eingriff der Außenmantelfläche der radialflexiblen Abrollbuchse in die zylindrische Stützfläche des Stützringes (circular-spline) kann form- oder kraftschlüssig erfolgen. Es kann zweckmäßig sein, zum formschlüssigen Eingriff die Außenmantelfläche der radialflexiblen Abrollbuchse mit einer Außenverzahnung und die zylindrische Stützfläche des Stützringes mit einer Innenverzahnung zu versehen. Der innenverzahnte Stützring hat eine größere Zähnezahl als die Außenmantelfläche der rad ialflexiblen Abrollbuchse, die mit zumindest zwei sich diametral gegenüberliegenden Umfangsabschnitten ihrer Außenverzahnung mit der Innerverzahnung des Stützringes im Eingriff steht.
Durch die Drehung des exzentrischen oder ellipsenförmigen Antriebskernes in der radialflexiblen Abrollbuchse werden bei jeder Umdrehung alle Zähne der Außenverzahnung der radialflexiblen Abrollbuchse nacheinander mit den Zähnen der Innenverzahnung des Stützringes in Eingriff gebracht, wodurch sich der Stützring mit der Getriebeausgangswelle um die Differenz der Zähnezahl verdreht. Es lassen sich mit einer Getriebestufe des Wellgetriebes Übersetzungen ins Langsame von etwa 1:20 bis 1:600 erreichen, wobei mehrer Getriebestufen hintereinander schaltbar sind. Es sind viele Zähne gleichzeitig im Eingriff, so dass bei der hohen Überdeckung eine mehrfache Drehmomentbelastung gegenüber vergleichbaren Getrieben ermöglicht ist und das Wellgetriebe entsprechend klein baut und eine sichere, spielfreie Drehmoment- und Drehwinkelübertragung zwischen der ersten Getriebeeingangswelle und der Getriebeausgangswelle der Lenkwelle durch das Wellgetriebe gewährleistet ist. Ist die Außenmantelfläche der Abrollbuchse mit der Stützfläche des Stützringes reibschlüssig im Eingriff, so lassen sich innerhalb gewisser Grenzbereiche beliebige Übersetzungen wählen.

Bei einer hydraulischen Hilfskraftlenkung ist das Überlagerungsgetriebe zweckmäßig zwischen einem Lenkventil und dem Lenkgetriebe oder zwischen der Lenkhandhabe und dem Lenkventil angeordnet. Bei einer elektrischen Hilfskraftlenkung ist das Überlagerungsgetriebe bevorzugt zwischen einem Lenkmomentsensor und dem Lenkgetriebe oder zwischen der Lenkhandhabe und dem Lenkgetriebe angeordnet.

Es kann auch zweckmäßig sein, das Wellgetriebe so in die Lenkwelle oder den Antriebsstrang zwischen der Lenkhandhabe und dem Lenkgetriebe einzubauen, dass die Lenkhandhabe drehfest mit dem Stützring verbunden ist und die radialflexible Abrollbuchse mit der Getriebeausgangswelle des Überlagerungsgetriebes drehfest verbunden ist.

Die Erfindung wird nun näher anhand eines Ausführungsbeispiels beschrieben und anhand der beiliegenden Zeichnung wiedergegeben.
- Fig. 1: zeigt eine Ansicht und einen teilweisen Längsschnitt durch eine erfindungsgemäße Überlagerungslenkung,
- Fig. 2: zeigt einen Längsschnitt durch ein Wellgetriebe der Überlagerungslenkung in Fig. 1,
- Fig. 3: zeigt einen Längsschnitt durch eine weitere Überlagerungslenkung,
- Fig. 4: zeigt ein Detail IV in Fig. 3.

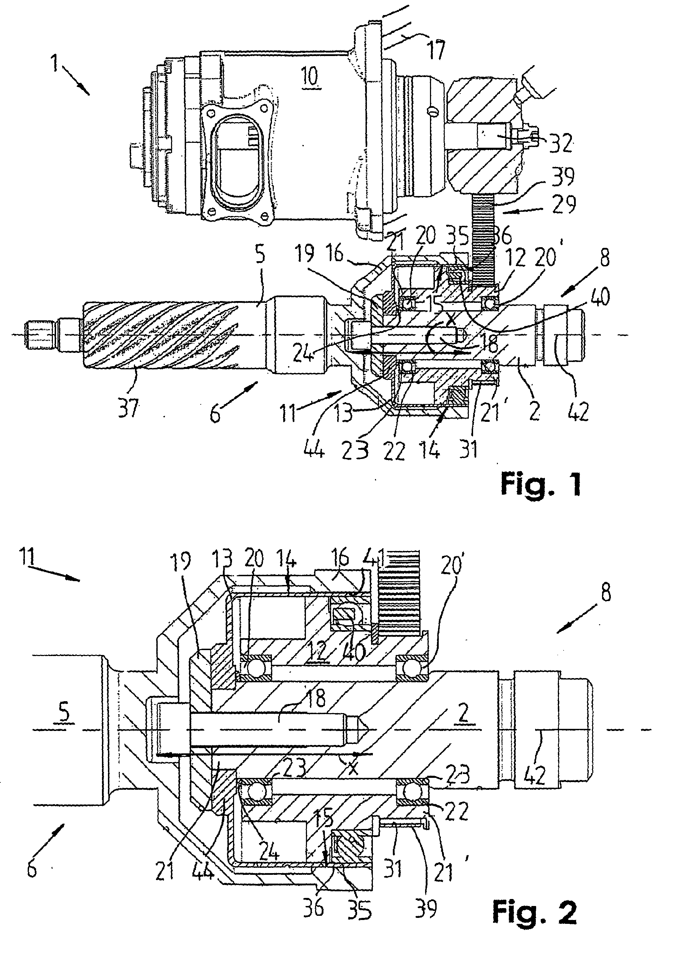

In Figur 1 ist in einer Ansicht und einem teilweisen Längsschnitt eine als Active Steering ausgebildete Überlagerungslenkung 1 für ein Fahrzeug gezeigt. Die Überlagerungslenkung 1 ist als elektrische Überlagerungslenkung aus einem Servomotor 10, der an einem fahrzeugfesten Bauteil 17 abgestützt ist, das nicht die Lenksäule des Fahrzeugs ist, einer Lenkwelle 8, die drehfest mit einer Lenkhandhabe 9 verbunden ist, aus einem Überlagerungsgetriebe 4 das als Wellgetriebe 11 ausgebildet ist und einer Eingangswelle 6 für ein Lenkgetriebe 7 gebildet. Das Lenkgetriebe 7 kann Teil einer elektrischen oder hydraulischen Hilfskraftlenkung sein.

Das Lenkgetriebe 7 besteht in dem gezeigten Ausführungsbeispiel aus einem schrägverzahnten Ritzel 37 das an einem axialen Ende der Eingangswelle 6 angeordnet ist und einer axialverschieblich gelagerten Zahnstange 38 mit der das Ritzel 37 kämmt. Die Zahnstange 38 ist in bekannter Weise gelenkig mit Spurhebeln an nicht dargestellten lenkbaren Rädern des Fahrzeugs befestigt.

Die Servomotorwelle 32 des Servomotors 10 ist über ein Getriebe 29, das als Zugmittelgetriebe 30 ausgebildet ist, mit dem Wellgetriebe 11 verbunden. Der Servomotor 10 stellt einen zusätzlichen Lenkwinkel auf das Wellgetriebe 11 bereit, wobei in dem in den Fig. 1 und 2 gezeigten Ausführungsbeispiel ein Zahnriemen 39 das Drehmoment und die Drehzahl des Servomotors 1O auf eine Riemenscheibe 31 des Wellgetriebes 11 überträgt. Die Riemenscheibe 31 ist Teil des Getriebes 29 und ist einstückig mit einer zweiten Getriebeeingangswelle 3 und einem exzentrischen, vorzugsweise ellipsenförmigen Antriebskern 12 gebildet. Der Antriebskern 12 ist an seinem, der Riemenscheibe 31 unmittelbar anschließenden axialen Bereich, ellipsenförmig ausgebildet.

Um dessen ellipsenförmigen Umfang ist ein flexibles Kugellager 40 aufgezogen. Der Antriebskern 12 greift mit seiner axialen Erstreckung von der Riemenscheibe 31 an in eine aus elastischem Stahlblech gebildete, topfförmige, radialflexible Abrollbuchse 13 (flex-spline) ein. Der Antriebskem 12 ist über jeweils an seinen axialen Enden 21,21' angeordneten Wälzlagern 20,20', die als Rillen kugellager gebildet sind, drehbar auf der ersten Getriebeeingangswelle 2 angeordnet. Die radialflexible Abrollbuchse 13 weist eine Außenmantelfläche 14 auf, die im axialen Bereich des Kugellagers 40 eine Außenverzahnung 35 trägt. Die Außenverzahnung 35 greift unter Wirkung der ellipsenförmigen Aufweitung der Abrollbuchse 13 mit zwei Umfangsabschnitten 41 in eine Innenverzahnung 36 an einer zylindrischen Stützfläche 15 eines drehfest mit der Eingangswelle 6 und einer Getriebeausgangswelle 5 des Wellgetriebes 11 verbundenen Stützringes 16 (circular-spline). Der Stützring 16 ist konzentrisch zu der Längsachse 42 der Lenkwelle 8 an der Eingangswelle 6 des Lenkgetriebes 7 bzw. der Getriebeausgangswelle 5 festgelegt. Bei Rotation des Antriebskernes 12 erfolgt die ellipsenförmige Aufweitung in fortlaufendem Wechsel entlang der Innenverzahnung 36. Der innenverzahnte Stützring 16 weist eine größere Zähnezahl als die radialflexible Abrollbuchse 13 auf, wodurch eine Verdrehung des Stützringes 16 pro Umdrehung des Antriebskernes 12 um die Differenz der Zähnezahl erfolgt.

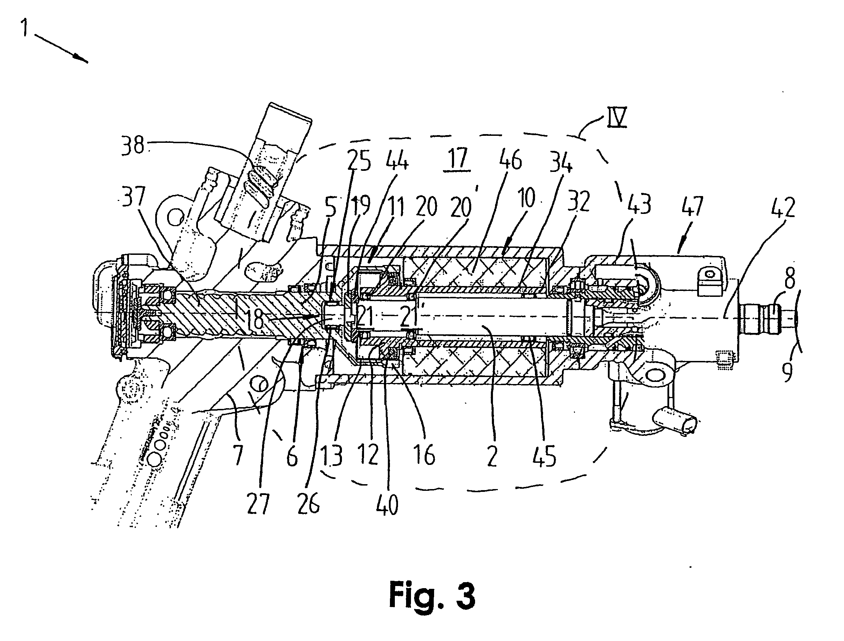

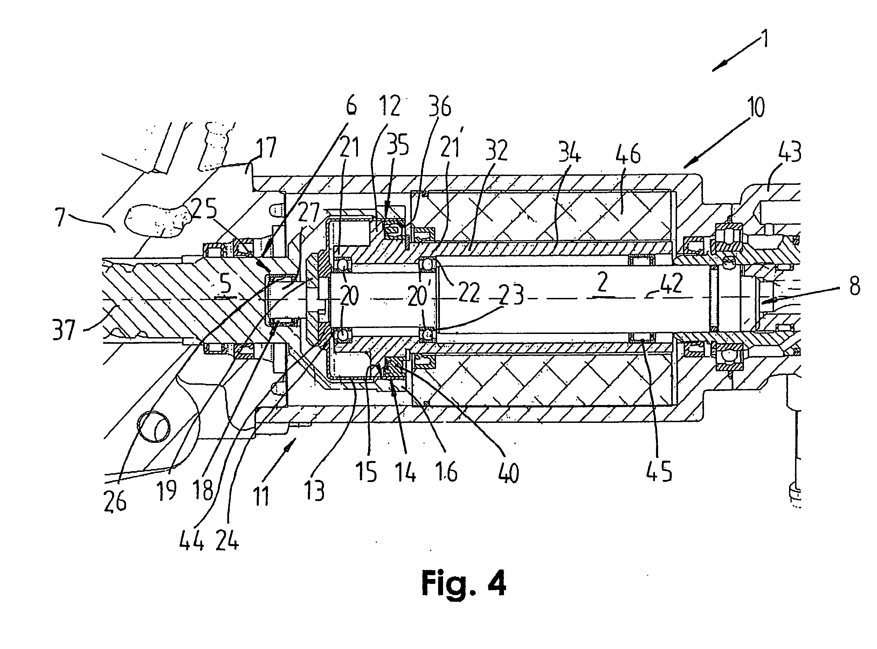

Zur kostengünstigen Darstellung und Montage des Wellgetriebes 11 ist dieses so funktional gestaltet, dass es ohne Gehäuse gebaut werden kann, obwohl es zweckmäßig ist, es in einem Gehäuse 43 an dem Lenkgetriebe 7 anzuordnen (vgl. Fig. 3,4).

Die Lenkwelle 8 ist im axialen Bereich x des Stützringes 16 getrennt und in eine erste Getriebeeingangswelle 2, die drehfest mit der Lenkhandhabe 9 verbunden ist und an deren anderen Ende der Antriebskern 12 und die radialflexible Abrollbuchse 13 angeordnet ist, sowie in eine Getriebeausgangswelle 5, die drehfest mit dem Stützring 16 und der Eingangswelle 6 verbunden ist, aufgeteilt. Auf diese Weise kann die Getriebeausgangswelle 5 relativ zu der ersten Getriebeeingangswelle 2 durch das Wellgetriebe 11 verdreht werden und ein von Fahrt- und Fahrzeugparametern abhängiger Lenkwinkel in die Lenkwelle 8 vor dem Lenkgetriebe 7 eingegeben werden.

Die erste Getriebeeingangswelle 2 ist zur leichteren Montage, zum etwaigen einfachen Tausch von Teilen des Wellgetriebes 11 und um die Teile des Wellgetriebes mit bekannten Fertigungsverfahren auch aus verschiedenen Werkstoffen herstellen zu können, formschlüssig lösbar mit der radialflexiblen Abrollbuchse 13 verbunden. Die Drehmomentübertragung von der ersten Getriebeeingangswelle 2 auf die radialflexible Abrollbuchse 13 übernimmt eine Kupplungsscheibe 19, die mit Hilfe von Rastelementen in die radialflexible Abrollbuchse 13 und die erste Getriebeeingangswelle 2 ragt. Die Kupplungsscheibe 19 ist an der Stirnseite der ersten Getriebeeingangswelle 2, die in den Stützring 16 ragt, mit einem als Schraubbolzen ausgebildeten, in die erste Getriebeeingangswelle 2 ragenden Verbindungselement 18 lösbar festgelegt.

Wie die Fig. 1 bis 4 zeigen, ist eine Tellerfeder 24 axial zwischen einem Innenring 23 des Wälzlagers 20 und einem Ringflansch 44 der radialflexiblen Abrollbuchse 13 eingespannt. Die Tellerfeder 24 spannt das Wälzlager 20 axial vor und bewirkt eine Spielfreistellung des Antriebskernes 12 auf der ersten Getriebeeingangswelle 2. Die Tellerfeder 24 kann auch auf den Außenring 22 des Wälzlagers 20 wirken.

Die Figuren 3 und 4 zeigen in einem Längsschnitt durch eine Überlagerungslenkung 1, deren Servomotor 10 als Hohlwellenmotor 33 ausgebildet ist, dass die erste Getriebeeingangswelle 2 in dem erfindungsgemäß gestalteten Wellgetriebe 11 nicht zwangsläufig fliegend gelagert sein muß, sondern dass die erste Getriebeeingangswelle 2 mit einem Lager 25 in dem Stützring 16 oder in der ersten Getriebeausgangswelle 5 gelagert sein kann. Das Lager 25 ist als Nadelhülse 26 und Radiallager gebildet, wobei ein formschlüssig lösbarer Lagerzapfen 27 an der Stirnfläche der ersten Getriebeeingangswelle 2 in die Nadelhülse 26 ragt. Der Lagerzapfen 27 weist einen Innensechskant auf und dient somit gleichzeitig als Verbindungselement 18 zur Festlegung der Kupplungsscheibe 19 und der radialflexiblen Abrollbuchse 13 an der ersten Getriebeeingangswelle 2. Bei allen gezeigten Ausführungsbeispielen ragt ein Kopf des Verbindungselements 18 axial in die Getriebeausgangswelle 5, wodurch die Bauform des Wellgetriebes 11 an Kompaktheit gewinnt.

Der Hohlwellenmotor 33 ist koaxial zu der Längsachse 42 der Lenkwelle 8 angeordnet. Der Servomotor 10 wird von der ersten Getriebeeingangswelle 2 der Lenkwelle 8 durchragt, wobei ein Läufer 34 des Servomotors 10 auf der Servomotorwelle 32 um die Lenkwelle 8 drehbar angeordnet ist. Die Servomotorwelle 32 ist einstückig mit dem Antriebskem 12 ausgebildet und mit Hilfe der Wälzlager 20,20' und der Nadelhülse 26 in der Getriebeausgangswelle 5 und einer weiteren Nadelhülse 45 zwischen der ersten Getriebeeingangswelle 2 und der Servomotorwelle 32 gelagert. Die weitere Nadelhülse 45 ist mit axialem Abstand zu den Wälzlagern 20,20' angeordnet.

Der Stator 46 des Servomotors 10 ist fest an dem Gehäuse 43 angeordnet, das das Wellgetriebe 11, den Servomotor 10 und eine Steuerungs- und/oder Regelungseinrichtung 47 umschließt. Das Wellgetriebe 11 , der Servomotor 10 und die Steuerungs- und/oder Regelungseinrichtung 47 sind voneinander räumlich getrennt und abgeschirmt in dem Gehäuse 43 angeordnet.

Anstelle des formschlüssigen Eingriffs der Außenmantelfläche 14 der Abrollbuchse 13 mit der Innerverzahnung 36 des Stützringes 16 kann es zweckmäßig sein, einen reibschlüssigen Eingriff der Außenmantelfläche 14 mit der zylindrischen Stützfläche 15 des Stützringes 16 vorzusehen, wodurch beliebige Untersetzungsverhältnisse gewählt werden können, deren Nenner keine ganze Zahl ist. Es können außerdem feine Zahnteilungen, Riefelungen oder Rändelungen vorgesehen sein.

### BEZUGSZEICHENLISTE

| | | | |
|---|---|---|---|
| 1 | Überlagerungslenkung | 26 | Nadelhülse |
| 2 | Getriebeeingangswelle, erste | 27 | Lagerzapfen |
| 3 | Getriebeeingangswelle, zweite | 28 | Vertiefung |
| 4 | Überlagerungsgetriebe | 29 | Getriebe |
| 5 | Getriebeausgangswelle | 30 | Zugmittelgetriebe |
| 6 | Eingangswelle | 31 | Riemenscheibe |
| 7 | Lenkgetriebe | 32 | Servomotorwelle |
| 8 | Lenkwelle | 33 | Hohlwellenmotor |
| 9 | Lenkhandhabe | 34 | Läufer |
| 10 | Servomotor | 35 | Außenverzahnung |
| 11 | Wellgetriebe | 36 | Innenverzahnung |
| 12 | Antriebskern, exzentrisch | 37 | Ritzel, schrägverzahnt |
| 13 | Abrollbuchse, radialflexibel | 38 | Zahnstange |
| 14 | Außenmantelfläche, v. 12 | 39 | Zahnriemen |
| 15 | Stützfläche, zylindrisch | 40 | Kugellager |
| 16 | Stützring | 41 | Umfangsabschnitt |
| 17 | Bauteil, fahrzeugfest | 42 | Längsachse, v. 8 |
| 18 | Verbindungselement | 43 | Gehäuse, v. 11 |
| 19 | Kupplungsscheibe | 44 | Ringflansch |
| 20,20' | Wälzlager | 45 | Nadelhülse |
| 21,21' | Ende, axial v. 12 | 46 | Stator |
| 22 | Außenring | 47 | Steuerungs-und/oder Regelungseinrichtung |
| 23 | Innenring | 48 | |
| 24 | Tellerfeder | 49 | |
| 25 | Lager | 50 | |
| X | Bereich, axial v. 16 | | |
| | | | |
| | | | |
| | | | |
| | | | |
| | | | |
| | | | |
| | | | |

## Patentansprüche

1. Überlagerungslenkung für ein Fahrzeug, insbesondere für eine Servo- oder Hilfskraftlenkung eines Kraftfahrzeuges, mit einem, eine erste Getriebeeingangswelle (2) und eine zweite Getriebeeingangswelle (3) aufweisenden, als Wellgetriebe (11) ausgebildeten Überlagerungsgetriebe (4) zur Überlagerung der an den beiden Getriebeeingangswellen (2,3) auftretenden Drehwinkeln auf eine Getriebeausgangswelle (5) des Überlagerungsgetriebes (4), die auf eine Eingangswelle (6) eines Lenkgetriebes (7) wirkt, wobei die erste Getriebeeingangswelle (2) über eine Lenkwelle (8) mit einer Lenkhandhabe (9) wirkverbunden ist und die zweite Getriebeeingangswelle (3) mit einem Servomotor (10) wirkverbunden ist, wobei die erste Getriebeeingangswelle (2) lösbar mit einer radialflexiblen Abrollbuchse (13) des Wellgetriebes (11) verbunden ist und einen exzentrischen Antriebskern (12) des Wellgetriebes (11), der in die radialflexible Abrollbuchse (13) ragt, durchgreift, **dadurch gekennzeichnet, dass** das Drehmoment des Servomotors (10) an einem fahrzeugfesten anderen Bauteil (17) der Überlagerungslenkung (1) oder des Fahrzeugs abgestützt ist, als einer Lenksäule.

2. Überlagerungslenkung nach Anspruch 1, **dadurch gekennzeichnet, dass** der Servomotor (10) auf den exzentrischen Antriebskern (12) an der zweiten Getriebeeingangswelle (3) des Wellgetriebes (11) ein Drehmoment und Drehwinkel bereitstellt und die radialflexible Abrollbuchse (13) formschlüssig lösbar mit der ersten Getriebeeingangswelle (2) verbunden ist und ein oder mehrer Umfangsabschnitte einer Außenmantelfläche (14) der radialflexiblen Abrollbuchse (13) in fortlaufendem Wechsel mit einer im wesentlichen zylindrischen Stützfläche (15) eines drehfest mit der Getriebeausgangswelle (5) verbundenen Stützrings (16) in Eingriff ist.

3. Überlagerungslenkung nach einem der Ansprüche 1 bis 2, **dadurch gekennzeichnet, dass** die radialflexible Abrollbuchse (13) mit einem Verbindungselement (18) und einer Kupplungsscheibe (19) an der ersten Getriebeeingangswelle (2) festgelegt ist.

4. Überlagerungslenkung nach einem der Ansprüche 1 bis 3, **dadurch gekennzeichnet, dass** der exzentrische Antriebskern (12) über Wälzlager (20,20') an seinen axialen Enden (21,21') an der ersten Getriebeeingangswelle (2) gelagert ist.

5. Überlagerungslenkung nach Anspruch 4, **dadurch gekennzeichnet, dass** ein Außen- oder Innenring (22,23) eines Wälzlagers (20,20') axial vorgespannt ist.

6. Überlagerungslenkung nach Anspruch 5, **dadurch gekennzeichnet, dass** der Außenring (22) oder der Innenring (23) des Wälzlagers (20,20') mit einer Tellerfeder (24) axial vorgespannt ist.

7. Überlagerungslenkung nach Anspruch 6, **dadurch gekennzeichnet, dass** die Tellerfeder (24) sich über die radialflexible Abrollbuchse (13) an der Kupplungsscheibe (19) abstützt.

8. Überlagerungslenkung nach einem der Ansprüche 1 bis 7, **dadurch gekennzeichnet, dass** die erste Getriebeeingangswelle (2) mit einem Lager (25) in dem Stützring (16) gelagert ist.

9. Überlagerungslenkung nach Anspruch 8, **dadurch gekennzeichnet, dass** das Lager (25) als Nadelhülse (26) ausgebildet ist.

10. Überlagerungslenkung nach einem der Ansprüche 8 oder 9 **dadurch gekennzeichnet dass** die erste Getriebeeingangswelle (2) mit einem formschlüssig lösbaren Lagerzapfen (27) in dem Lager (25) gelagert ist.

11. Überlagerungslenkung nach Anspruch 10, **dadurch gekennzeichnet, dass** in dem Lagerzapfen (27) eine im Querschnitt von der Kreisform abweichende Vertiefung (28) angeordnet ist.

12. Überlagerungslenkung nach einem der Ansprüche 1 bis 11, **dadurch gekennzeichnet, dass** der Servomotor (10) über ein Getriebe (29) mit der zweiten Getriebeeingangswelle (3) wirkverbunden ist.

13. Überlagerungslenkung nach Anspruch 12, **dadurch gekennzeichnet, dass** das Getriebe (29) ein Zahnradgetriebe, wie etwa ein Stirnradgetriebe, ein Schneckengetriebe, ein Schraubgetriebe oder ein Kegelradgetriebe ist.

14. Überlagerungslenkung nach Anspruch 13, **dadurch gekennzeichnet, dass** der exzentrische Antriebskern (12) mit der zweiten Getriebeeingangswelle (3) und einem Zahnrad des Getriebes (29) einstückig ausgebildet ist.

15. Überlagerungslenkung nach Anspruch 12, **dadurch gekennzeichnet, dass** das Getriebe (29) als Zugmittelgetriebe (30) ausgebildet ist.

16. Überlagerungslenkung nach Anspruch 15, **dadurch gekennzeichnet, dass** der exzentrische Antriebskern (12) und die zweite Getriebeeingangswelle (3) einstückig mit einer Riemenscheibe (31) des Getriebes (29) ausgebildet ist.

17. Überlagerungslenkung nach einem der Ansprüche 1 bis 11, **dadurch gekennzeichnet, dass** der exzentrische Antriebskern (12) mit einer, die zweite Getriebeeingangswelle (3) bildenden Servomotorwelle (32) einstückig gebildet ist.

18. Überlagerungslenkung nach Anspruch 17, **dadurch gekennzeichnet, dass** der Servomotor (10) als Hohlwellenmotor (33) ausgebildet ist, wobei ein Läufer (34) des Servomotors (10) um die Lenkwelle (8) drehbar angeordnet ist.

19. Überlagerungslenkung nach einem der Ansprüche 1 bis 18, **dadurch gekennzeichnet, dass** die Stromzufuhr und/oder die Signalleitung zu dem Servomotor (10) ohne eine Übertragungseinrichtung wie Schleifer oder Wickelfedern erfolgt.

20. Überlagerungslenkung nach einem der Ansprüche 1 bis 19, **dadurch gekennzeichnet, dass** das Wellgetriebe (11) im Wesentlichen aus Stahl gebildet ist.

21. Überlagerungslenkung nach einem der Ansprüche 1 bis 19, **dadurch gekennzeichnet, dass** das Wellgetriebe im Wesentlichen aus Kunststoff gebildet ist.

22. Überlagerungslenkung nach einem der Ansprüche 1 bis 21, **dadurch gekennzeichnet, dass** die Abrollbuchse (13) eine Außenverzahnung (35) aufweist, die mit einer Innenverzahnung (36) des Stützringes (16) in Eingriff ist.

23. Überlagerungslenkung nach einem der Ansprüche 1 bis 22, **dadurch gekennzeichnet, dass** das Überlagerungsgetriebe (4) bei einer hydraulischen Hilfskraftlenkung zwischen einem Lenkventil und dem Lenkgetriebe (7) oder zwischen der Lenkhandhabe (9) und dem Lenkventil angeordnet ist.

24. Überlagerungslenkung nach einem der Ansprüche 1 bis 22, **dadurch gekennzeichnet, dass** das Überlagerungsgetriebe (4) bei einer elektrischen Hilfskraftlenkung zwischen einem Lenkmomentsensor und dem Lenkgetriebe (7) oder zwischen der Lenkhandhabe (9) und dem Lenkgetriebe (7) angeordnet ist.

25. Überlagerungslenkung nach einem der Ansprüche 2 bis 24, **dadurch gekennzeichnet, dass** das Wellgetriebe (11) so zwischen der Lenkhandhabe (9) und dem Lenkgetriebe (7) eingebaut ist, dass der Stützring (16) drehfest mit der Lenkhandhabe (9) verbunden ist und die radialflexible Abrollbuchse (13) drehfest mit der Getriebeausgangswelle (5) verbunden ist.

## Claims

1. Superimposed steering system for a vehicle, in particular for a power steering system or a power assistance steering system for a motor vehicle, having a variable ratio gear unit (4) which has a first gear unit input shaft (2) and a second gear unit input shaft (3) and is configured as a harmonic drive (11) for the superimposition of the rotational angles which occur at the two gear unit input shafts (2, 3) onto a gear unit output shaft (5) of the variable ratio gear unit (4), which gear unit output shaft (5) acts on an input shaft (6) of a steering gear (7), the first gear unit input shaft (2) being operatively connected to a steering handle (9) via a steering shaft (8) and the second gear unit input shaft (3) being operatively connected to a servomotor (10), the first gear unit input shaft (2) being connected releasably to a radially flexible flexspline (13) of the harmonic drive (11) and penetrating an eccentric drive core (12) of the harmonic drive (11), said eccentric drive core (12) protruding into the radially flexible flexspline (13), **characterized in that** the torque of the servomotor (10) is supported on another component (17), fixed to the vehicle, of the superimposed steering system (1) or the vehicle, than on a steering column.

2. Superimposed steering system according to Claim 1, **characterized in that** the servomotor (10) provides a torque and rotational angle to the eccentric drive core (12) on the second gear unit input shaft (3) of the harmonic drive (11), and the radially flexible flexspline (13) is connected to the first gear unit input shaft (2) in a form-fitting and releasable manner, and one or more circumferential sections of an outer circumferential surface (14) of the radially flexible flexspline (13) is in engagement in a continuously changing manner with a substantially cylindrical supporting surface (15) of a circular spline (16) which is connected fixedly in terms of rotation to the gear unit output shaft (5).

3. Superimposed steering system according to either of Claims 1 and 2, **characterized in that** the radially flexible flexspline (13) is fixed on the first gear unit input shaft (2) with a connecting element (18) and a clutch plate (19).

4. Superimposed steering system according to one of Claims 1 to 3, **characterized in that** the eccentric drive core (12) is mounted on the first gear unit input shaft (2) via roller bearings (20, 20') at its axial ends (21, 21').

5. Superimposed steering system according to Claim 4, **characterized in that** an outer or inner ring (22, 23) of a roller bearing (20, 20') is prestressed axially.

6. Superimposed steering system according to Claim 5, **characterized in that** the outer ring (22) or the inner ring (23) of the roller bearing (20, 20') is prestressed axially with a disc spring (24).

7. Superimposed steering system according to Claim 6, **characterized in that** the disc spring (24) is supported on the clutch plate (19) via the radially flexible flexspline (13).

8. Superimposed steering system according to one of Claims 1 to 7, **characterized in that** the first gear unit input shaft (2) is mounted in the circular spline (16) with a bearing (25).

9. Superimposed steering system according to Claim 8, **characterized in that** the bearing (25) is configured as a needle bush (26).

10. Superimposed steering system according to either of Claims 8 and 9, **characterized in that** the first gear unit input shaft (2) is mounted in the bearing (25) with a form-fittingly releasable bearing journal (27).

11. Superimposed steering system according to Claim 10, **characterized in that** a depression (28) whose cross section deviates from the circular shape is arranged in the bearing journal (27).

12. Superimposed steering system according to one of Claims 1 to 11, **characterized in that** the servomotor (10) is operatively connected to the second gear unit input shaft (3) via a gear unit (29).

13. Superimposed steering system according to Claim 12, **characterized in that** the gear unit (29) is a gear mechanism, such as a spur gear mechanism, a helical gear mechanism or a bevel gear mechanism.

14. Superimposed steering system according to Claim 13, **characterized in that** the eccentric drive core (12) is of one-piece configuration with the second gear unit input shaft (3) and a gear wheel of the gear unit (29).

15. Superimposed steering system according to Claim 12, **characterized in that** the gear unit (29) is configured as a flexible drive mechanism (30).

16. Superimposed steering system according to Claim 15, **characterized in that** the eccentric drive core (12) and the second gear unit input shaft (3) are of one-piece configuration with a pulley wheel (31) of the gear unit (29).

17. Superimposed steering system according to one of Claims 1 to 11, **characterized in that** the eccentric drive core (12) is formed in one piece with a servomotor shaft (32) which forms the second gear unit input shaft (3).

18. Superimposed steering system according to Claim 17, **characterized in that** the servomotor (10) is configured as a hollow shaft motor (33), a rotor (34) of the servomotor (10) being arranged rotatably about the steering shaft (8).

19. Superimposed steering system according to one of Claims 1 to 18, **characterized in that** the current supply and/or the signal forwarding to the servomotor (10) takes place without a transfer device such as sliders or flat spiral springs.

20. Superimposed steering system according to one of Claims 1 to 19, **characterized in that** the harmonic drive (11) is formed substantially from steel.

21. Superimposed steering system according to one of Claims 1 to 19, **characterized in that** the harmonic drive is formed substantially from plastic.

22. Superimposed steering system according to one of Claims 1 to 21, **characterized in that** the flexspline (13) has an external toothing system (35) which is in engagement with an internal toothing system (36) of the circular spline (16).

23. Superimposed steering system according to one of Claims 1 to 22, **characterized in that** the variable ratio gear unit (4) is arranged between a steering valve and the steering gear (7) or between the steering handle (9) and the steering valve in the case of a hydraulic power assistance steering system.

24. Superimposed steering system according to one of Claims 1 to 22, **characterized in that** the variable ratio gear unit (4) is arranged between a steering moment sensor and the steering gear (7) or between the steering handle (9) and the steering gear (7) in the case of an electric power assistance steering system.

25. Superimposed steering system according to one of Claims 2 to 24, **characterized in that** the harmonic drive (11) is installed between the steering handle (9) and the steering gear (7) in such a way that the circular spline (16) is connected fixedly in terms of rotation to the steering handle (9) and the radially flexible flexspline (13) is connected fixedly in terms of rotation to the gear unit output shaft (5).

## Revendications

1. Direction à superposition pour un véhicule, en particulier pour une direction d'asservissement ou auxiliaire d'un véhicule automobile, avec un engrenage de superposition (4) réalisé en tant que mécanisme à arbre (11) présentant un premier arbre de transmission d'entrée (2) et un deuxième arbre de transmission d'entrée (3) pour la superposition des angles de rotation apparaissant au niveau des deux arbres de transmission d'entrée (2, 3) à un arbre de transmission de sortie (5) de l'engrenage de superposition (4), qui agit sur un arbre d'entrée (6) d'un mécanisme de direction (7), le premier arbre de transmission d'entrée (2) étant en liaison active via un arbre de direction (8) avec une manette de direction (9) et le deuxième arbre de transmission d'entrée (3) étant en liaison active avec un servomoteur (10), le premier arbre de transmission d'entrée (2) étant en liaison détachable avec un guide de déroulement radialement flexible (13) du mécanisme à arbre (11) et traversant un noyau d'entraînement excentrique (12) du mécanisme à arbre (11), lequel s'érige dans le guide de déroulement radialement flexible (13), **caractérisée en ce que** le couple de rotation du servomoteur (10) est en appui sur un autre composant (17) fixe du véhicule de la direction à superposition (1) ou du véhicule, différent d'une colonne de direction.

2. Direction à superposition selon la revendication 1, **caractérisée en ce que** le servomoteur (10) met à disposition, sur le noyau d'entraînement excentrique (12) au niveau du deuxième arbre de transmission d'entrée (3) du mécanisme à arbre (11), un couple de rotation et un angle de rotation, et **en ce que** le guide de déroulement radialement flexible (13) est en liaison mécanique détachable avec le premier arbre de transmission d'entrée (2) et **en ce qu'**un ou plusieurs segments périphériques d'une enveloppe externe (14) du guide de déroulement radialement flexible (13) sont en prise en alternance continue avec une surface de support (15) essentiellement cylindrique d'une bague de support (16) en solidarité de rotation avec l'arbre de transmission de sortie (5).

3. Direction à superposition selon l'une des revendications 1 à 2, **caractérisée en ce que** le guide de déroulement radialement flexible (13) est fixé avec un élément de liaison (18) et un disque d'embrayage (19) sur le premier arbre de transmission d'entrée (2).

4. Direction à superposition selon l'une des revendications 1 à 3, **caractérisée en ce que** le noyau d'entraînement excentrique (12) tourne sur palier via des paliers à roulement (20, 20') au niveau de ses extrémités axiales (21, 21') sur le premier arbre de transmission d'entrée (2).

5. Direction à superposition selon la revendication 4, **caractérisée en ce qu'**une bague extérieure ou intérieure (22, 23) d'un palier à roulement (20, 20') est précontrainte axialement.

6. Direction à superposition selon la revendication 5, **caractérisée en ce que** la bague extérieure (22) ou la bague intérieure (23) du palier à roulement (20, 20') est précontrainte axialement avec un ressort à disques (24).

7. Direction à superposition selon la revendication 6, **caractérisée en ce que** le ressort à disques (24) est en appui via le guide de déroulement radialement flexible (13) sur le disque d'embrayage (19).

8. Direction à superposition selon l'une des revendications 1 à 7, **caractérisée en ce que** le premier arbre de transmission d'entrée (2) est tourné sur palier avec un palier (25) dans la bague de support (16).

9. Direction à superposition selon la revendication 8, **caractérisée en ce que** le palier (25) est formé en tant que douille d'aiguille (26).

10. Direction à superposition selon l'une des revendications 8 ou 9, **caractérisée en ce que** le premier arbre de transmission d'entrée (2) est tourné sur palier (25) avec un bout d'arbre détachable de manière mécanique (27).

11. Direction à superposition selon la revendication 10, **caractérisée en ce qu'**un creux (28) divergeant par rapport à la forme circulaire en coupe transversale est aménagé dans le bout d'arbre (27).

12. Direction à superposition selon l'une des revendications 1 à 11, **caractérisée en ce que** le servomoteur (10) est en liaison active via un engrenage (29) avec le deuxième arbre de transmission d'entrée (3).

13. Direction à superposition selon la revendication 12, **caractérisée en ce que** l'engrenage (29) est une commande par engrenages, telle que par exemple un réducteur à roues droites, un engrenage à vis sans fin, un engrenage hélicoïdal ou un engrenage conique.

14. Direction à superposition selon la revendication 13, **caractérisée en ce que** le noyau d'entraînement excentrique (12) est formé d'une seule pièce avec le deuxième arbre de transmission d'entrée (3) et une roue dentée de l'engrenage (29).

15. Direction à superposition selon la revendication 12, **caractérisée en ce que** l'engrenage (29) est réalisé en tant que transmission par élément flexible (30).

16. Direction à superposition selon la revendication 15, **caractérisée en ce que** le noyau d'entraînement excentrique (12) et le deuxième arbre de transmission d'entrée (3) sont formés d'une seule pièce avec une poulie à courroie (31) de l'engrenage (29).

17. Direction à superposition selon l'une des revendications 1 à 11, **caractérisée en ce que** le noyau d'entraînement excentrique (12) est formé d'une seule pièce avec un arbre de servomoteur (32) formant le deuxième arbre de transmission d'entrée (3).

18. Direction à superposition selon la revendication 17, **caractérisée en ce que** le servomoteur (10) est réalisé en tant que moteur à axe creux (33), un rotor (34) du servomoteur (10) étant disposé de manière rotative autour de l'arbre de direction (8).

19. Direction à superposition selon l'une des revendications 1 à 18, **caractérisée en ce que** l'alimentation en courant et/ou l'acheminement des signaux vers le servomoteur (10) s'effectuent sans dispositif de transmission tel qu'un frotteur ou des ressorts spirale.

20. Direction à superposition selon l'une des revendications 1 à 19, **caractérisée en ce que** le mécanisme à arbre (11) est essentiellement formé en acier.

21. Direction à superposition selon l'une des revendications 1 à 19, **caractérisée en ce que** le mécanisme à arbre est essentiellement formé en matière synthétique.

22. Direction à superposition selon l'une des revendications 1 à 21, **caractérisée en ce que** le guide de déroulement (13) présente une denture extérieure (35) qui est en prise avec une denture intérieure (36) de la bague de support (16).

23. Direction à superposition selon l'une quelconque des revendications 1 à 22, **caractérisée en ce que** pour une direction auxiliaire hydraulique, l'engrenage de superposition (4) est disposé entre une soupape de direction et le mécanisme de direction (7), ou entre la manette de direction (9) et la soupape de direction.

24. Direction à superposition selon l'une des revendications 1 à 22, **caractérisée en ce que** pour une direction auxiliaire électrique, l'engrenage de superposition (4) est disposé entre un détecteur de moment de direction et le mécanisme de direction (7), ou bien entre la manette de direction (9) et le mécanisme de direction (7).

25. Direction à superposition selon l'une quelconque des revendications 2 à 24, **caractérisée en ce que** le mécanisme à arbre (11) est monté entre la manette de direction (9) et le mécanisme de direction (7) de manière à ce que la bague de support (16) soit en solidarité de rotation avec la manette de direction (9) et que le guide de déroulement radialement flexible (13) soit en solidarité de rotation avec l'arbre de transmission de sortie (5).
